# EUROPEAN PATENT APPLICATION

(11) **EP 4 822 188 A1**
(43) Date of publication of application: **14.10.2026**
(21) Application number: 26170376.3
(22) Date of filing: 02.04.2026
(51) Int. Cl.: F04D 29/70, B01D 33/073, F04D 13/06, F04D 13/08

(54) **APPARATUS FOR WITHDRAWING AND DISTRIBUTING A LIQUID**

(30) Priority: 10.04.2025 IT 202500007950
(71) Applicant: Euromacchine S.r.l., 31047 Ponte di Piave (TV) (IT)
(72) Inventor: BARBARES, Davide, 31046 Oderzo (IT); BARATTIN, Luca, 31046 Oderzo (IT)
(74) Representative: Paparo, Aldo

(57) **Abstract**

Apparatus 1 for withdrawing and distributing a liquid operating in a floating position on a liquid accumulation area of the type comprising a drum filter 2, supported by a frame 7, crossed therein by a suction duct 9 in hydraulic connection, the latter, to a distribution duct 10 adapted to bring the liquid to an end user. From the accumulation area, through the suction duct 9 and the distribution duct 10, a portion of liquid is withdrawn through a pumping unit 11. Said pumping unit 11 being located inside the suction duct 9.

## Description

The present invention relates to an apparatus for withdrawing and distributing a liquid, particularly water, from an accumulation area such as a stream, a river, a natural or artificial basin. The apparatus according to the invention finds a particular field of application in agriculture, in order to withdraw water to be used to irrigate cultivated fields, but it can also be used for withdrawing and distributing sewage or used in other environments where liquid transfer operations are necessary, including, for example, areas affected by natural disasters or which are in emergency situations.

In the agricultural sector, the field with the most frequent application of the present apparatus, systems are known which provide a tube having one end immersed in an accumulation area and the opposite end hydraulically connected to a distribution motor pump. The motor pump, thanks to a centrifugal pump powered by a generator set, withdraws the liquid and distributes it, in some cases, to a recoiler connected to a field sprinkler, or in other cases, to an irrigation system of the pivot type.

The centrifugal pumps used in these systems have two main problems: priming and cavitation. The problem related to priming is connected to the ability of the pump to suck the air contained in the suction duct during the start-up phase of the pump itself. When the pump is activated, it begins to work trying to expel the air contained in the duct and sucking the liquid so as to fill the chamber inside which the impeller and the suction duct rotate. For as long as the pump body and the suction duct are not filled with liquid, the pump does not start and the system does not start working at full capacity, sending the pressurised liquid to the target users. Since the irrigation of a field is carried out through irrigation cycles, which can also be started more than once a day, the problem of priming occurs whenever the apparatus is switched off and on or on again with a different location of the apparatus depending on the irrigation areas.

Cavitation is a phenomenon consisting of the formation of vapour areas inside the fluid that can implode, damaging the pump components and more often the impeller.

This problem occurs due to an overly fast operation of the pump, or due to the use of a suction tube with an overly small diameter, or due to the excessive distance or excessive height of the pump with respect to the source of the fluid.

To solve at least in part the problem of priming, a non-return valve is applied in the suction duct so as to keep the suction duct full of liquid between the shutdown and reactivation of the pump during the different irrigation cycles. These remedies are not effective with the first activation of the system and whenever, for example, the system must move to another place, the suction duct empties of the liquid.

To solve at least in part the cavitation problems, the current centrifugal pumps used in the described apparatuses are provided with a set of sensors and inverters capable of controlling the number of revolutions of the impeller and/or blocking the operation of the pump if abnormal operating parameters of the pump are detected.

The end of the suction duct, immersed in the liquid accumulation area, must provide a filter to prevent sucked impurities from entering the pump, or other sections of the circuit with moving parts, and damaging the components of the apparatus. In some cases static filters are used, while in others self-cleaning dynamic filters are used. Dynamic self-cleaning filters are generally preferred since, due to the substantially fixed location of the end immersed in the liquid basin, the static filter tends to become occluded, penalising the flow rate of liquid entering the suction duct.

An example of a self-cleaning dynamic filter is described in US2007227956 in which a substantially cylindrical drum body is illustrated, floating and placed in rotation, through hydrodynamic thrust, around an axis thereof. A suction duct begins from the inside of the drum, fixed with respect to the drum, connected to a pump located on the edge of the water accumulation area. The self-cleaning function is obtained as a result of a plurality of nozzles which spray a high-pressure liquid against the inner wall of the drum, so as to detach any dirt or debris which deposits on the outer region of the drum.

On the suction duct, in the portion which crosses the inside of the drum, a valve unit is provided to counteract the aforementioned problem of priming. The valve unit is an assembly which can penalise the operating efficiency of the motor pumps connected to these filters. As soon as there is a problem with the flow of even a single plate, the effectiveness of the liquid seal inside the suction duct is lost.

A further example of a self-cleaning dynamic filter is described in US20140138300, by the same Applicant, in which a filter is illustrated having an electric movement of the drum, instead of hydrodynamic, and designed to operate at lower operating depths.

The aforementioned solution has an inlet tube inside the drum, provided with a plurality of liquid withdrawal and supply openings.

In both cases, the dynamic filters are designed to work in coupling, through a connection with a supply tube, to a motor pump located on the edge of the accumulation area.

The current self-cleaning filter and motor pump coupling is penalised for the priming and cavitation problems associated with the centrifugal pump provided on board the motor pump.

In addition, the self-cleaning filter and motor pump coupling defines a bulky apparatus, difficult to move in different operating points and requiring double maintenance.

The technical task of the present invention is thus to provide an apparatus for withdrawing and distributing a liquid which is capable of overcoming the drawbacks arising from the prior art.

Therefore, the object of the present invention is to provide an apparatus for withdrawing and distributing a liquid which has reduced overall dimensions and which, as a result of its compactness, is easily transportable and installable in even small and shallow liquid accumulation areas.

A further object of the present invention is to provide an apparatus for withdrawing and distributing a liquid having a self-priming liquid withdrawal system.

The specified technical task and the specified objects are substantially achieved by an apparatus for withdrawing and distributing a liquid comprising the technical features as set out in one or more of the appended claims. The dependent claims correspond to possible embodiments of the invention.

Further features and advantages of the present invention will become more apparent from the indicative and thus non-limiting description of an embodiment of an apparatus for withdrawing and distributing a liquid.

Such a description will be set out below with reference to the appended drawings, which are provided solely for illustrative and therefore non-limiting purposes, in which:
- Figure 1 shows a front diagrammed view of an apparatus for withdrawing and distributing a liquid according to the present invention, in a use configuration;
- Figure 2 shows a side view of the apparatus of Figure 1 with some parts removed to better highlight others;
- Figure 3 shows a plan view of the apparatus of Figure 1;
- Figure 4 shows a plan view of the apparatus of Figure 1 with some parts sectioned to illustrate some internal components of the apparatus.
- Figure 5 shows a partially sectioned plan view of some components belonging to the apparatus.

With reference to the appended figures, 1 denotes an apparatus for withdrawing and distributing a liquid, particularly water, preferably intended for irrigation systems.

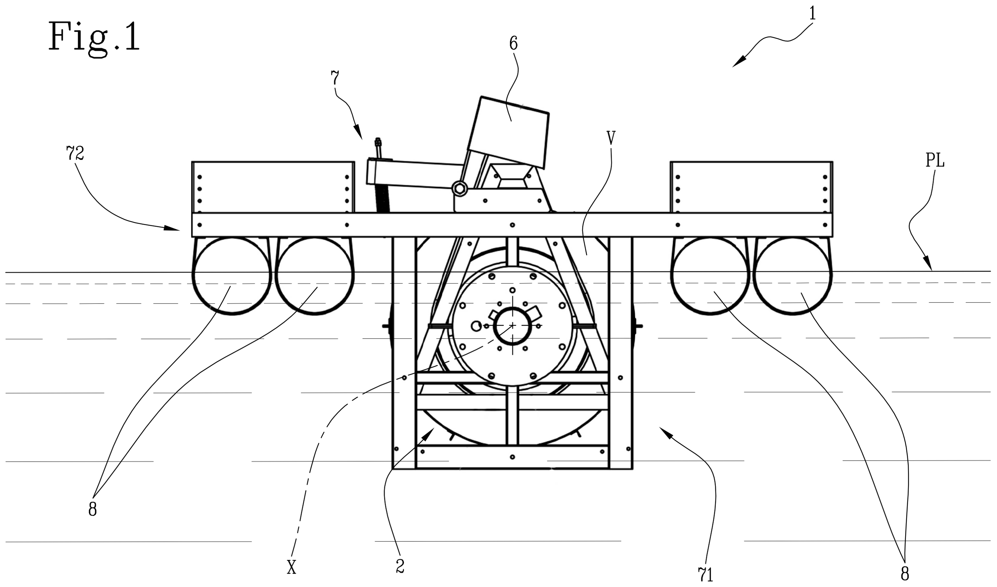

As can be seen in Figure 1, the apparatus 1 operates in a floating position with a portion of the apparatus immersed below the free surface PL of a liquid accumulation area and the remaining portion of the section placed above the free surface PL of the liquid accumulation area.

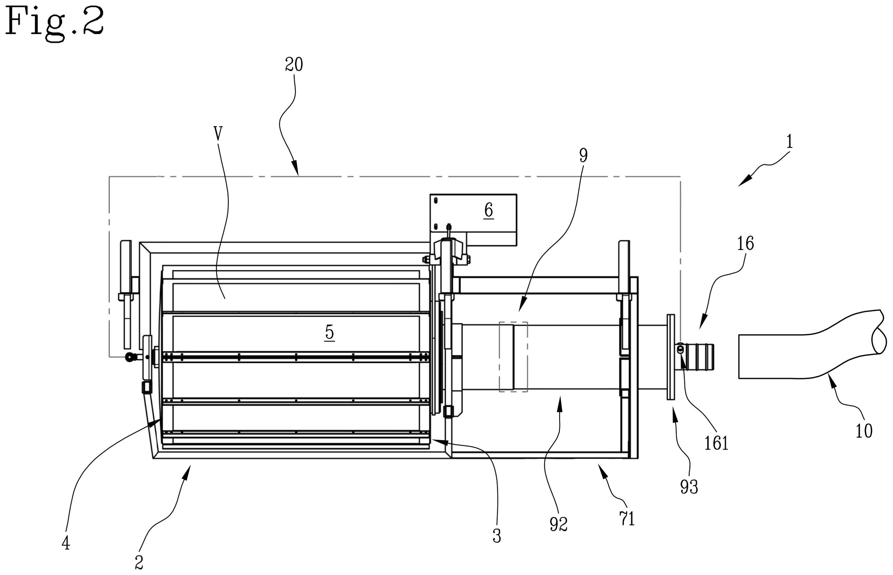

The apparatus 1 comprises a drum filter 2, better illustrated in Figure 2, having a substantially cylindrical shape with extension along a longitudinal axis X. In use the drum filter 2 has the longitudinal axis X substantially parallel to the free surface PL of the liquid.

Said drum filter has a front disc 3 and a rear disc 4, substantially parallel and spaced apart from each other. The front and rear discs 3, 4 are connected by a filtering side wall 5 extending around the longitudinal axis X. Filtering wall is intended as a mesh surface, wound on itself, having a circular closed contour in cross-section. The front disc 3, rear disc 4 and filtering side wall 5 define a confinement volume V therein communicating with the outside, i.e., with the liquid accumulation area, by the effect of the filtering side wall 5.

The drum filter 2, when the apparatus 1 is placed in operation, lies partially immersed for a height, measured transversely with respect to a diameter passing through the longitudinal axis X of the filter 2, extending from the lower end of the drum 2 up to a portion passing through the longitudinal axis X.

The drum filter 2, when the apparatus 1 is placed in operation, rotates around the longitudinal axis X under the action of a hydrodynamic thrust and under the action of a drive torque generated by motorised means 6.

According to the first example, the drum filter 2 can be set in rotation by the currents which cross the liquid accumulation area or through a flow of pressurised liquid which tangentially hits the blades (not shown in the appended figures because they are known) keyed to the outside of the drum filter.

Alternatively, motorised means 6 can be provided, shown in Figure 2 in schematic form, which with appropriate reducers, motion transmission means, inverters and other kinematics transfer a rotation motion of the drum 2 around the longitudinal axis X.

The drum is supported by a frame 7 having the function of ensuring, together with floating means 8, the floating of the drum 2 on the liquid accumulation area and at the same time supporting the drum filter 2 in rotation around the longitudinal axis X.

The frame 7 comprises at least one lower portion 71 which, when the apparatus 1 is placed in operation, is immersed, at least partially, in the liquid accumulation area and at the same time defines, through known manners, the support for the rotation of the drum filter 2. As can be seen in Figures 1 and 2, the lower portion 71 is defined by a parallelepiped frame.

The frame 7 further comprises an upper portion 72 which, when the apparatus 1 is placed in operation, lies close to the free surface PL of the liquid accumulation area. The upper portion 72 is defined by at least one pair of crosspieces, connected to the lower portion 71, on which the floating means 8 engages.

A preferably rigid suction duct 9 is connected to the drum filter 2 passing through the front disc 3 (or the rear disc 4).

The crossing of the suction duct 9 along the front disc 3 divides the same into a first section 91 and a second section 92.

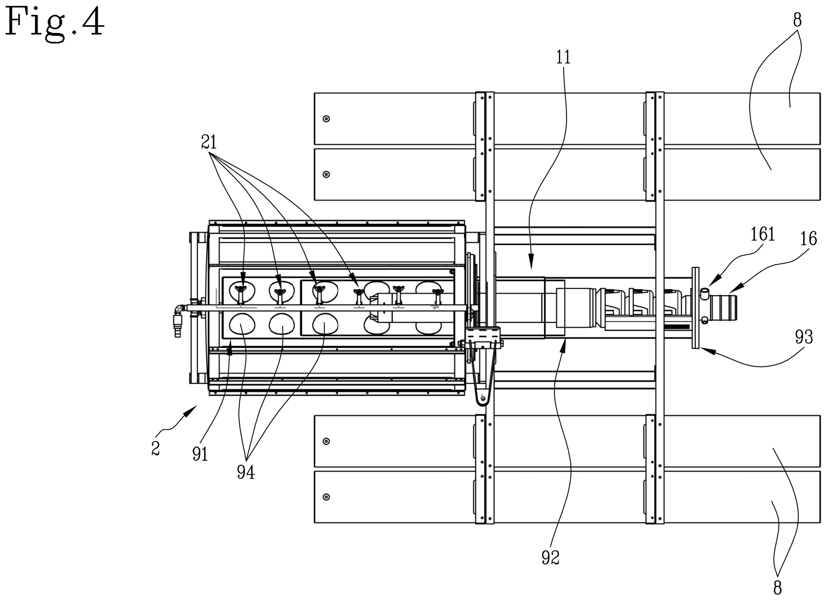

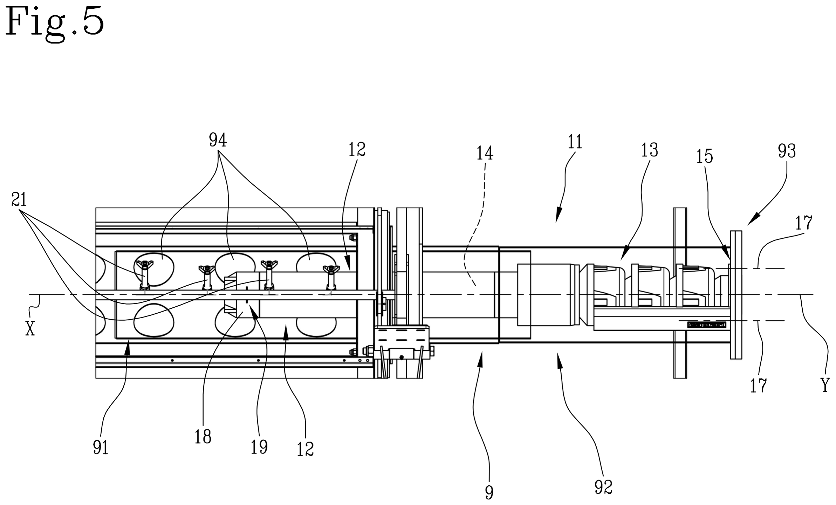

The first section 91 is therefore contained inside the confinement volume V and immersed inside the liquid accumulation area and communicating therewith through a plurality of communication openings 94 (visible in Figures 4 and 5).

The second section 92 extends the first section 91 and emerges from the drum filter 2, i.e., outside the confinement volume V, while remaining immersed in the liquid accumulation area. The end part of the second section 92, opposite the first section 91, ends, in a position spaced apart from the drum filter 2 and more precisely in a position spaced apart from the front disc 3, with a flanged body 93 whose function will be described below.

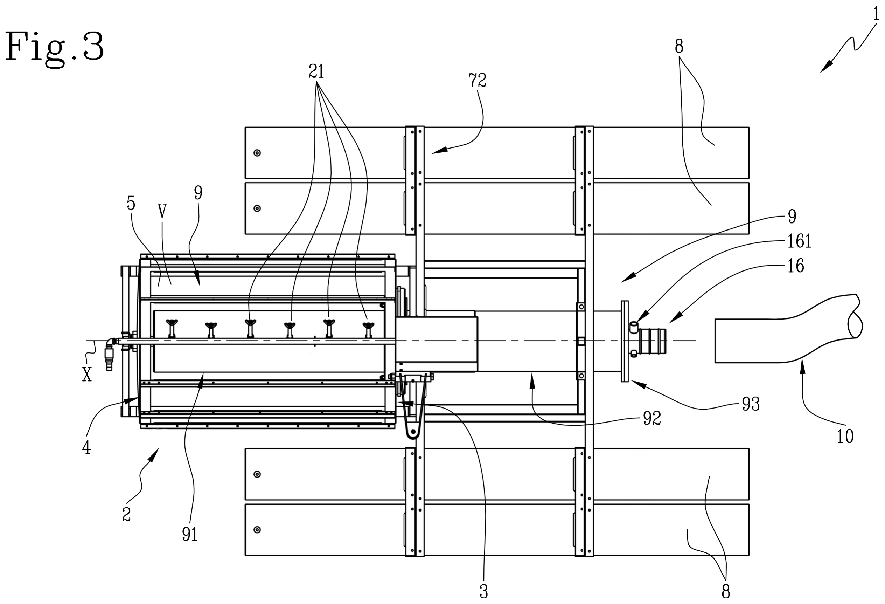

The liquid contained inside the accumulation area is withdrawn, through the suction duct 9, and pumped under pressure along the distribution duct 10, schematically illustrated in Figures 2 and 3, by effect of a pumping unit 11.

The pumping unit 11 is located inside the suction duct 9 upstream of the distribution duct 10. As can be seen in Figure 5, the pumping unit 11 is entirely contained inside the suction duct 9.

Also from Figure 5, it is possible to note how the pumping unit 11 is entirely crossing the second section 92 and partially crossing the first section 91.

An annular chamber is delimited between the inside of the second section 92 of the suction duct 9, and the outside of the pumping unit 11, extending along the longitudinal axis X, inside which the sucked fluid flows, acting as a means for cooling the pumping unit 11.

That is, the suction duct 9 also defines a cooling jacket for the pumping unit 11.

Said pumping unit 11 is a submerged electric pump extending along a main axis Y.

Said pumping unit 11, in the condition of use of the apparatus 1, has a main axis Y parallel, preferably coincident with the longitudinal axis X of the drum filter 2.

Said pumping unit 11 comprises a motor unit 12, for setting in rotation the drive shaft 14 to which an impeller unit 13 is coupled. The impeller unit 13 ends, on the side opposite the motor body 12, with a flanged portion 15.

Downstream of the impeller unit 13 and the flanged portion 15, the pumping unit 11 ends with a connection fitting 16, hydraulically connected to the distribution duct 10.

The connection fitting 16 has a tapping branch 161 illustrated in Figures 2- 4.

Said tapping branch 161 is in hydraulic communication with an auxiliary duct 20, schematically depicted in Figure 2 with a line, entering inside the confinement volume V of the drum filter 2. Said auxiliary duct 20 feeds a plurality of nozzles 21 (illustrated in Figures 3-5) ejecting liquid from the inside to the outside of the drum filter 2 along a radial direction incident to the filtering side wall 5.

Above, the pumping unit is fixed to the suction duct 9 through the coupling of the flanged portion 15 to the flanged body 93 by fixing means 17.

Behind, the motor body 12 of the pumping unit 11 is coupled to an engagement ring 18 having a plurality of radial projections 19 engageable inside the first section 91 of the suction duct 9.

As a result of the coupling of the flanged portion 15 with the flanged body 93 and of the coupling of the radial projections 19 inside the first section 91, the pumping unit 11 is isostatically fixed inside the suction duct 9.

The present invention achieves important advantages. Firstly, the application of a submerged electric pump creates a self-priming solution which therefore does not require self-priming systems which would penalise the reliability of the apparatus 1.

The insertion of the electric pump 11 inside the suction duct 9 minimises the overall dimensions and weights of the apparatus, while still guaranteeing high flow rates and medium-high pressures. Thanks to the submerged electric pump, it is possible to guarantee the operation of the apparatus 1 with much larger water level variations with respect to the previous systems provided with centrifugal pumps positioned on the edge of the liquid accumulation area.

The placement of the pumping unit 11 inside the suction duct 9, crossed by a constant flow of liquid, makes the suction duct assume the function of a cooling jacket which allows an extension of the use times of the pumping unit.

## Claims

1. An apparatus (1) for withdrawing and distributing a liquid operating in a floating position on a liquid accumulation area of the type comprising:
- a drum filter (2), substantially cylindrical in shape with extension along a longitudinal axis (X), having a front disc (3) and a rear disc (4) connected to each other by a filtering side wall (5) extending around the longitudinal axis (X) and connecting to the opposite ends of the front disc and rear disc (3,4); said filtering side wall (5) and said front and rear discs (3,4) defining a confinement volume (V) therein communicating with the outside by the effect of the filtering side wall (5); said drum filter (2) rotating around the longitudinal axis (X) under the action of a hydrodynamic thrust or under the action of a drive torque generated by motorised means (6);
- a frame (7) for supporting the drum filter (2) and comprising a lower portion (71), at least partially immersed inside the liquid accumulation area, defining a support for rotation of the drum filter (2) and an upper portion (72) connected to floating means (8) to allow the apparatus (1) to emerge, at least partially, above the free surface of the liquid accumulation area;
- a suction duct (9), preferably rigid, connected in a fixed position relative to the drum filter (2) and passing through the front disc (3) defining a first section (91), immersed inside the liquid accumulation area and communicating therewith through a plurality of communication openings (94), contained inside the confinement volume (V) and a second section (92), immersed inside the liquid accumulation area, emerging outside the confinement volume (V);
- a distribution duct (10), preferably flexible, hydraulically connected to the suction duct (9), at the second section (92), to bring the liquid to an end user;
- a pumping unit (11) to allow the suction of the liquid from the suction duct (9) and the pumping of the pressurised liquid along the distribution duct (10);
**characterised in that** said pumping unit (11) is located inside the suction duct (9) upstream of the distribution duct (10).

2. The apparatus (1) according to the preceding claim, wherein said pumping unit (11) is a submerged electric pump, extending along a main axis (Y).

3. The apparatus (1) according to claim 2, wherein said pumping unit (11) comprises a motor body (12) for rotating a drive shaft (14) to which a unit of impellers (13) is coupled; said unit of impellers (13) terminating, on the opposite side to the motor body (12), with a flanged portion (15).

4. The apparatus (1) according to claim 3, wherein said pumping unit (11) has the drive shaft (14) with the main axis (Y) parallel, preferably coincident, with the longitudinal axis (X) of the drum filter (2).

5. The apparatus (1) according to claim 1, wherein said second section (92) of the suction duct (9) ends in a position which is spaced apart from the drum filter (2) with a flanged body (93).

6. The apparatus (1) according to claims 3 and 5, wherein said pumping unit (11) is fixed to the suction duct (9) through the coupling of the flanged portion (15) to the flanged body (93) by fixing means (17).

7. The apparatus (1) according to claim 3, wherein said motor body (12) is coupled to an engagement ring (18) having a plurality of radial projections (19) engageable inside the first section (91) of the suction duct (9).

8. The apparatus (1) according to any one of the preceding claims, wherein between the inside of the second section (92) of the suction duct (9) and the outside of the pumping unit (11) an annular chamber is delimited, extending along the longitudinal axis (X), inside which the pumping fluid flows, cooling the pumping unit (11); said suction duct (9) being adapted to define a cooling jacket for the pumping unit (11).

9. The apparatus (1) according to claim 3, wherein said pumping unit (11) downstream of the unit of impellers (13), opposite the annular body (12), has a connection fitting (16) hydraulically connected to the distribution duct (10); said connection fitting (16) having a tapping branch (161).

10. The apparatus (1) according to claim 9, wherein said tapping branch (161) being hydraulically connected to an auxiliary duct (20), entering inside the confinement volume (V) of the drum filter (2), feeding a plurality of nozzles (21), adapted to eject the liquid from the inside to the outside of the drum filter (2) in a radial direction incident to the filtering side wall (5).
